# FASCICULE DE BREVET EUROPEEN

(11) **EP 1 050 545 B1**
(45) Date de publication et mention de la délivrance du brevet: **03.11.2004**
(21) Numéro de dépôt: 00108775.8
(22) Date de dépôt: 25.04.2000
(51) Int. Cl.: C08C 19/42, C08C 19/26

(54) **Procédé de préparation de polymères qui comportent au moins une double liaison et qui présentent des fonctions à radical carbonyle le long de leur chaine**
Verfahren zur Herstellung von Polymeren mit mindestens einer Doppelbindung und Carbonylgruppen entlang der Kette
Process for preparing polymers containing at least a double bond and carbonyl functions in the chain

(30) Priorité: 05.05.1999 FR 9905746
(43) Date de publication de la demande: 08.11.2000
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Robert, Pierre, 63170 Perignat Les Sarlieve (FR); Laubry, Philippe, 63200 Marsat (FR)
(74) Mandataire: Hiebel, Robert

(56) Documents cités:
- EP-A- 0 796 869
- US-A- 3 781 260
- KORNILOVA T A ET AL: "SYNTHESIS OF POLYFUNCTIONAL HYDROXYL CONTAINING POLYSIOPRENE BY MEANS OF THE METALLATION METHOD" POLYMER SCIENCE,US,INTERPERIODICA, BIRMINGHAM, AL, vol. 35, no. 4, page 549-551 XP000364825 ISSN: 0965-545X

## Description

La présente invention concerne un procédé de préparation de polymères qui comportent au moins une double liaison, qui présentent des fonctions à radical carbonyle le long de leur chaîne et qui sont utilisables dans des enveloppes de pneumatique.

Depuis que les économies de carburant et la nécessité de protéger l'environnement sont devenues une priorité, il est souhaitable de produire des mélanges de polymères diéniques possédant une hystérèse aussi faible que possible afin de pouvoir les mettre en oeuvre sous forme de produits semi-finis entrant dans la composition d'enveloppes de pneumatiques tels que, par exemple, des sous-couches, des gommes de liaison entre caoutchoucs de différentes natures ou de calandrage de renforts métalliques ou textiles, des gommes de flancs ou des bandes de roulement et obtenir des pneumatiques aux propriétés améliorées, des pneumatiques possédant notamment une résistance au roulement réduite et une tenue en usure améliorée.

Or, on sait que les interactions entre les polymères et les charges renforçantes qui sont utilisées dans ces enveloppes, à base de silice ou de noir de carbone dans la plupart des cas, ont une influence significative sur les propriétés précitées de ces enveloppes.

Pour l'optimisation de ces interactions, on a cherché à modifier la nature des polymères diéniques après polymérisation, notamment par l'intermédiaire d'agents permettant de fonctionnaliser ces polymères le long de leur chaîne ou en extrémité de chaîne.

A ce jour, plusieurs procédés ont été utilisés pour fonctionnaliser un polymère insaturé le long de sa chaîne.

On peut par exemple citer la fonctionnalisation par hydrosilylation, qui consiste essentiellement à faire réagir une solution de polymère insaturé avec un dérivé hydrogéné du silicium, la fonctionnalisation par greffage de dérivés d'azocarboxylates, ou par métallation en utilisant le butyl lithium.

On pourra se reporter à l'article suivant pour une description détaillée de ces procédés: D. N. Schulz, K. N. Turner et M. A. Golub, Rubber Chemistry and Technology, 1982, Vol. 55, pp. 809-859.

Un inconvénient majeur de ces procédés de fonctionnalisation le long de la chaîne réside dans le coût relativement élevé qu'ils impliquent, pour l'obtention de polymères fonctionnalisés ne présentant pas une évolution de macrostructure par rapport aux polymères de départ.

Le but de la présente invention est de pallier cet inconvénient.

A cet effet, le procédé de préparation selon l'invention de polymères qui comportent au moins une double liaison et qui présentent des fonctions à radical carbonyle le long de leur chaîne consiste,
- dans une première étape, à soumettre dans un solvant hydrocarboné inerte un polymère de départ comportant au moins une double liaison à une réaction d'hydroalumination ou de carboalumination le long de sa chaîne, par addition d'un agent dérivé de l'aluminium audit polymère de départ,
- dans une seconde étape, à ajouter au produit de cette réaction au moins un agent électrophile prévu pour réagir avec ledit agent dérivé de l'aluminium,
- dans une troisième étape, à stopper ultérieurement la réaction de fonctionnalisation de la seconde étape et à récupérer le polymère fonctionnalisé le long de sa chaîne.

Le polymère de départ peut être naturel ou synthétique, et il peut être déjà fonctionnalisé ou non. Il peut s'agir d'un homopolymère ou d'un copolymère, le terme « copolymère » couvrant les polymères obtenus chacun à partir de deux, ou plus de deux monomères, par exemple des terpolymères.

On peut citer, comme exemples de monomères utilisables pour l'obtention de ce polymère de départ, l'isoprène, le butadiène, l'isobutylène et les composés vinylaromatiques substitués ou non.

Parmi les homopolymères de départ pouvant être utilisés, on peut par exemple citer le polybutadiène ou le polyisoprène.

Concernant les copolymères de départ utilisables, on peut par exemple citer les copolymères styrène-butadiène obtenus par polymérisation anionique ou en émulsion, des copolymères isoprène-butadiène, des terpolymères styrène-butadiène-isoprène ou encore des terpolymères d'éthylène, de propylène et d'un diène.

Avantageusement, on utilise des polymères de départ qui sont des élastomères diéniques, en vue de l'obtention d'élastomères fonctionnalisés le long de la chaîne.
◇ Pour mettre en oeuvre les réactions d'hydroalumination ou de carboalumination relatives à la première étape du procédé, qui se traduisent respectivement par l'addition d'une liaison Al-H ou Al-C sur une double liaison dudit polymère de départ suivant les schémas réactionnels Al-H + C=C --> H-C-C-Al ou Al-C + C=C --> C-C-C-Al, on peut notamment utiliser pour ledit agent dérivé de l'aluminium un alkyl aluminium ou un aluminate.

De préférence, on utilise l'hydrure de diisobutyl aluminium (appelé HDiBA par la suite).

Cette première étape est avantageusement mise en oeuvre dans un solvant hydrocarboné inerte, de telle manière que le nombre de moles d'agent dérivé de l'aluminium pour 1000 g de polymère de départ soit compris entre 0,05 mole et 5 moles, et de préférence entre 0,05 mole et 0,5 mole.

A titre de solvant hydrocarboné inerte, on peut notamment utiliser le toluène, le xylène, l'heptane, ou encore le cyclohexane.

De préférence, on met en oeuvre cette première étape à une température comprise entre 20° C et 100° C et, à titre encore plus préférentiel, entre 50° C et 70° C.
◇ Pour mettre en oeuvre ladite seconde étape du procédé selon l'invention, on utilise de préférence un agent électrophile ayant un hétéroatome tel que l'azote et/ou l'oxygène. Plus particulièrement, on peut utiliser à titre d'agent électrophile des anhydrides, notamment le dioxyde de carbone, ou des isocyanates, ou encore des dérivés carbonyles.

En vue d'obtenir un polymère ayant des fonctions acide carboxylique le long de la chaîne, on utilise de préférence un anhydride à titre d'agent électrophile, et de préférence du dioxyde de carbone. On peut également utiliser un anhydride cyclique, tel que l'anhydride succinique.

Pour l'obtention de polymères ayant des fonctions amide le long de la chaîne, on utilise de préférence un isocyanate, tel que le phényl isocyanate.

Pour l'obtention de polymères ayant des fonctions acide carboxylique ou amide le long de la chaîne, cette seconde étape est avantageusement mise en oeuvre de telle manière que le rapport molaire du nombre de moles d'agent électrophile sur le nombre de moles d'agent dérivé de l'aluminium soit égal ou supérieur à 3.

Quant à l'obtention spécifique de polymères fonctionnalisés amide avec le phényl isocyanate, ledit rapport molaire est sensiblement égal à 4.

De préférence, on met en oeuvre cette seconde étape à une température comprise entre 20° C et 100° C et, à titre encore plus préférentiel, entre 50° C et 70° C.
◇ Pour le stoppage de la réaction de fonctionnalisation de cette seconde étape, on ajoute de préférence un complexant métallique qui a en outre pour effet de fluidifier le milieu réactionnel. Ce complexant est à titre préférentiel constitué d'un chélate métallique pouvant libérer au moins un proton lors de la réaction de complexation.

De préférence, on utilise pour ledit chélate de l'acétylacétone. On peut également utiliser la benzoyl acétone ou la 8-hydroxyquinoléine.

Le rapport molaire du nombre de moles de ce complexant sur le nombre de moles d'agent dérivé de l'aluminium est alors égal ou supérieur à 3.

Dans le cas d'une fonctionnalisation acide carboxylique ou amide avec respectivement le dioxyde de carbone ou le phényl isocyanate pour agent électrophile et suite à l'addition dudit complexant métallique, on ajoute au milieu réactionnel un acide fort protonique pour parfaire ledit stoppage, par exemple l'acide chlorhydrique.

Le rapport molaire du nombre de moles d'acide fort protonique sur le nombre de moles d'agent dérivé de l'aluminium est alors égal ou supérieur à 3.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans ces exemples, les masses moléculaires moyennes en nombre (Mn) des polymères de départ et des polymères fonctionnels correspondants ont été déterminées précisément par osmométrie.

On a également utilisé la technique SEC (chromatographie d'exclusion par la taille) pour déterminer les distributions de masses moléculaires relatives à des échantillons de ces polymères. A partir de produits étalons dont les caractéristiques sont décrites dans l'exemple 1 du document de brevet européen EP-A-692 493, cette technique a permis d'évaluer pour un échantillon une masse moléculaire en nombre qui a une valeur relative, à la différence de celle déterminée par osmométrie, ainsi qu'une masse moléculaire moyenne en poids (Mw). On en a déduit l'indice de polydispersité (Ip=Mw/Mn ) de cet échantillon.

Selon cette technique, on sépare physiquement les macromolécules suivant leurs tailles respectives à l'état gonflé, dans des colonnes remplies d'une phase stationnaire poreuse. Avant de mettre en oeuvre cette séparation, on solubilise l'échantillon de polymère à une concentration d'environ 1 g/l dans du tétrahydrofuranne.

On utilise pour la séparation précitée un chromatographe commercialisé sous la dénomination « WATERS » et sous le modèle « 150C ». Le solvant d'élution est le tétrahydrofuranne, le débit est de 1 ml/min, la température du système est de 35° C et la durée d'analyse est de 30 min. On utilise un jeu de deux colonnes « WATERS » dont le type est « STYRAGEL HT6E ».

Le volume injecté de la solution d'échantillon de polymère est de 100 µl. Le détecteur est un réfractomètre différentiel « WATERS » dont le modèle est « R401 ». On utilise également un logiciel d'exploitation des données chromatographiques, dont la dénomination commerciale est « WATERS MILLENIUM ».

### Exemple 1: préparation d'un polybutadiène stéréospécifique 1,4 cis qui est fonctionnalisé acide carboxylique par hydroalumination avec HDiBA et par addition électrophile de dioxyde de carbone

On utilise ici une solution désoxygénée d'un polybutadiène de départ dont la masse moléculaire moyenne en nombre, déterminée par osmométrie, est Mn=190000 g/mole et dont l'indice de polydispersité, déterminée par la technique SEC, est Ip=2,31.

Les pourcentages en enchaînements 1,4-cis et 1,2 de ce polybutadiène de départ sont respectivement de 92 % et 4 %.

De plus, cette solution de départ contient 0,2 pce d'un anti-oxydant constitué de N-(1,3-diméthylbutyl)-N'-phényl-p-phénylènediamine.

Selon les techniques connues de l'homme du métier et dans les conditions mentionnées au tableau I suivant, on introduit, à température ambiante dans un réacteur de 10 litres contenant 7 litres de ladite solution désoxygénée, la quantité nécessaire d'une solution toluénique molaire d'HDiBA (la fraction pondérale de la solution polymérique dans le toluène est de 7 %).

On maintient le milieu réactionnel sous agitation pendant 10 minutes pour l'homogénéiser suffisamment. Puis on stoppe l'agitation et on réalise l'hydroalumination en régime statique, à 65° C et pendant 64 heures.

On procède ensuite à la fonctionnalisation dans le même réacteur, à 65° C et pendant 6 heures, par l'intermédiaire d'une mise sous pression de 6 bars avec du dioxyde de carbone.

On stoppe ensuite la réaction, d'abord avec de l'acétylacétone selon un rapport molaire acétylacétone/aluminium de 12, puis avec de l'acide chlorhydrique selon un rapport molaire acide chlorhydrique/aluminium de 4,5.

On traite ensuite la solution d'élastomère obtenue avec 0,5 pce d'un anti-oxydant constitué de 2,2'-méthylène-bis (4-méthyl-6-t-butylphénol), puis on procède en milieu acide (pH=2) à un stripping, de préférence à la vapeur d'eau. On essore ensuite sur un outil à cylindres et à 100° C l'élastomère ainsi traité, qui est séché sous vide à 60° C (atmosphère inerte d'azote) pendant 18 heures.

Puis on procède à une préparation spécifique de l'élastomère, pour pouvoir le caractériser analytiquement.

Cette préparation spécifique consiste à traiter l'élastomère par trois mises en solution successives dans du toluène, respectivement suivies de coagulations dans un mélange qui est constitué d'acétone et d'eau et qui est acidifié à pH=2 avec de l'acide chlorhydrique, cela afin d'éliminer toutes traces éventuelles de composés acides (stoppeur, anti-oxydant, résidus catalytiques, sous-produits tels que l'acide isovalérique, notamment). On sèche ensuite l'élastomère ainsi traité dans une étuve à 50° C, sous vide et sous atmosphère d'azote.

On a ensuite dosé par acidimétrie les fonctions COOH, et on a calculé, d'une part, le taux de ces fonctions COOH par kg de polymère et, d'autre part, le nombre de motifs par chaîne sur la base d'une Mn (déterminée par osmométrie) de 190000 g/mole.

Ce dosage par acidimétrie a été réalisé en mettant en solution un échantillon de l'élastomère ainsi préparé dans un mélange de toluène et d'orthodichlorobenzène. Les fonctions COOH sont neutralisées en présence de pyridine, avec une solution d'hydroxyde de tétrabutylammonium dans de l'isopropanol. L'équivalence est détectée par potentiométrie.

Les résultats obtenus sont également présentés dans le tableau I, qui se réfère audit polybutadiène de départ et au polybutadiène fonctionnalisé correspondant (appelé « PB fct »).

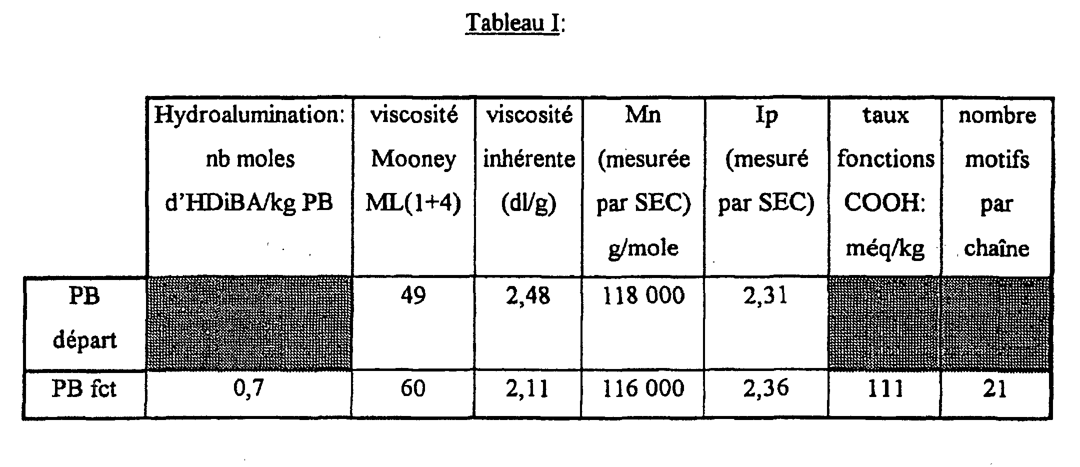

### Exemple 2: préparation de plusieurs copolymères styrène-butadiène fonctionnalisés acide carboxylique ou amide par hydroalumination avec HDiBA et par addition électrophile de dioxyde de carbone ou de phényl isocyanate

On a procédé dans cet exemple à six expériences de fonctionnalisation en utilisant pour chacune d'entre elles une même solution désoxygénée d'un copolymère styrène-butadiène de départ, dont la masse moléculaire moyenne en nombre, déterminée par osmométrie, est Mn=180000 g/mole et dont l'indice de polydispersité, déterminé par la technique SEC, est Ip=1,09

Les pourcentages de styrène, d'enchaînements 1,4-cis, d'enchaînements 1,4-trans et d'enchaînements 1,2 de ce copolymère de départ sont respectivement de 25 %, 28 %, 32 % et 40 %.

De plus, cette solution de départ contient 0,2 pce de l'anti-oxydant N-1,3-diméthylbutyl-N'-phényl-p-phénylènediamine et 0,2 pce de l'anti-oxydant 2,2'-méthylène-bis (4-méthyl-6-t-butylphénol).
◇ Pour chacune des cinq premières expériences, on a mis en oeuvre le procédé qui a été décrit en relation avec l'exemple 1, c'est-à-dire pour une fonctionnalisation acide carboxylique avec un agent électrophile constitué de dioxyde de carbone. On a simplement fait varier d'une expérience à l'autre le rapport molaire HDiBA/kg polymère, avec les seules différences suivantes par rapport au procédé précité.

- La fraction pondérale de la solution polymérique dans le toluène est de 10 % au lieu de 7 %.
- On stoppe la réaction avec de l'acide chlorhydrique selon un rapport molaire acide chlorhydrique/aluminium de 7,5 au lieu de 4,5.
- On traite ensuite l'élastomère obtenu avec 0,3 pce de l'anti-oxydant 2,2'-méthylène-bis (4-méthyl-6-t-butylphénol) au lieu de 0,5 pce, ceci avant le stripping en milieu acide.
- Puis on remet l'élastomère en solution dans le toluène, avec de l'acide chlorhydrique aqueux concentré, de telle manière que le rapport molaire acide chlorhydrique/aluminium soit égal à 5.
- On réalise ensuite un second stripping en milieu acide pour pouvoir éliminer totalement l'acide isovalérique résiduel, qui est un sous-produit de la carboxylation des radicaux isobutyle contenus dans l'HDiBA.

On a calculé le taux des fonctions acide carboxylique (en méq/kg de polymère) et le nombre de motifs fonctionnels correspondants par chaîne de copolymère (avec Mn=180000 g/mole déterminée par osmométrie) en mettant en oeuvre, pour chacun de ces deux calculs, deux méthodes différentes:
- une première méthode a consisté à doser les fonctions acide carboxylique par acidimétrie comme décrit dans l'exemple 1, et
- une seconde méthode a consisté en un dosage selon la technique RMN ¹H, après estérification avec un excès de diazométhane, réactif connu pour réagir avec les fonctions acide carboxylique.

Plus précisément, cette seconde méthode consiste à obtenir, à l'aide du diazométhane, des fonctions ester méthylique à partir des fonctions COOH qui ont été fixées sur l'élastomère, en vue d'accéder indirectement et de manière quantitative aux taux de fonctions COOH par RMN ¹H.

On prépare au préalable le diazométhane de la façon suivante.

On l'obtient par action de la potasse alcoolique sur le N-méthyl-N-nitroso-paratoluène sulfonamide, en présence de diéthyl éther et à la température de la glace fondante. On récupère ensuite la phase éthérée contenant le réactif par une simple distillation.

On met ensuite en oeuvre la réaction d'estérification de la manière suivante.

On solubilise dans du toluène un échantillon de l'élastomère ayant été lavé et séché, de la manière précédemment décrite dans le cadre de la préparation spécifique de l'élastomère en vue de sa caractérisation analytique. On y ajoute ensuite la solution éthérée contenant le diazométhane, de telle manière qu'il y ait un excès de réactif par rapport aux fonctions COOH. On fait par la suite coaguler dans du méthanol le polymère ainsi traité, puis on le remet par deux fois en solution dans le toluène et dans le méthanol pour sa coagulation. On sèche ensuite le polymère dans un dessicateur, à température ambiante et sous vide poussé, au moyen d'une pompe à palettes.

On procède ensuite à une analyse RMN ¹H de la manière suivante.

On solubilise dans du sulfure de carbone un échantillon du polymère ainsi estérifié. On utilise pour l'analyse du signal RMN ¹H un spectromètre commercialisé sous la dénomination BRUKER AC200. Le signal caractéristique des trois protons méthyliques de COOCH₃ permet d'accéder quantitativement au taux initial de fonctions COOH du polymère fonctionnel.
◇ Pour la sixième expérience, on a mis en oeuvre le même procédé qui vient d'être décrit pour les cinq premières expériences, à la seule différence que l'agent électrophile utilisé pour la fonctionnalisation est le phényl isocyanate, à la place du dioxyde de carbone, pour une fonctionnalisation amide (celle-ci est toujours réalisée à 65° C et pendant 6 heures).

De plus, le rapport molaire du nombre de moles de phényl isocyanate sur le nombre de moles d'HDiBA est égal à 4.

On a calculé le taux des fonctions amide (en méq/kg de polymère) et le nombre de motifs fonctionnels correspondants par chaîne de copolymère (avec Mn=180000 g/mole déterminée par osmométrie) par simple analyse RMN ¹H, de la manière suivante.

On traite, préalablement à cette analyse RMN ¹H, un échantillon du polymère à analyser par trois cycles successifs consistant chacun en une mise en solution dans le toluène et en une coagulation dans du méthanol. On sèche ensuite l'échantillon ainsi traité à température ambiante et dans un dessicateur sous vide poussé, au moyen d'une pompe à palettes.

Pour l'analyse RMN ¹H, on solubilise dans du sulfure de carbone un échantillon du polymère ainsi traité et séché. Les signaux caractéristiques dûs à la présence de CONH-C₆H₅ permettent d'accéder quantitativement au taux de fonctions amide du polymère fonctionnel.

Les résultats obtenus sont également présentés dans le tableau II ci-dessous, qui se réfère audit copolymère styrène-butadiène de départ et à un copolymère qui a été hydroaluminé selon un rapport molaire déterminé « HDiBA/kg polymère » mais qui n'a pas été fonctionnalisé (appelé « SBR hydroal »), et aux six copolymères qui ont été hydroaluminés dans des proportions différentes et qui ont été en outre fonctionnalisés (appelés SBR fct 1, ..., SBR fct 6).
On remarquera que les polymères fonctionnalisés « SBR fct 5 et SBR fct 6» sont chacun obtenus à partir du polymère hydroaluminé « SBR hydroal ».

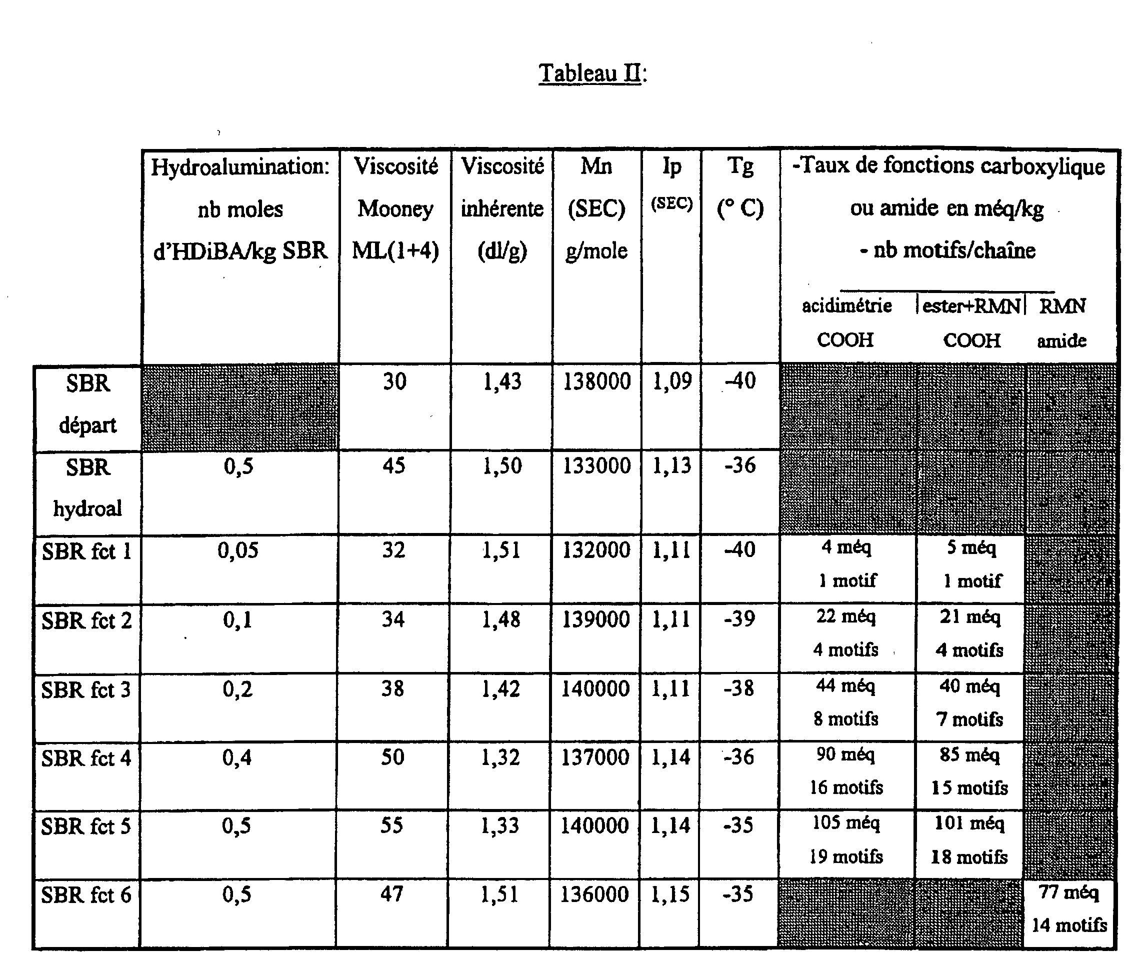

Au vu de ces divers exemples de mise en oeuvre du procédé selon l'invention, on notera que les polymères fonctionnalisés obtenus présentent une macrostructure qui est pratiquement identique à celle des polymères de départ correspondants, comme le montrent les résultats de distribution des masses moléculaires (indices Ip de polydispersité caractérisant les polymères correspondants).

On notera également que les élastomères fonctionnalisés qui ont été obtenus par les exemples précités de procédés selon l'invention sont particulièrement destinés à être utilisés dans des enveloppes de pneumatiques.

## Revendications

1. Procédé de préparation de polymères qui comportent au moins une double liaison et qui présentent des fonctions à radical carbonyle le long de leur chaîne, caratérisé en ce qu'il consiste,
- dans une première étape, à soumettre dans un solvant hydrocarboné inerte un polymère de départ comportant au moins une double liaison à une réaction d'hydroalumination ou de carboalumination le long de sa chaîne, par addition d'un agent dérivé de l'aluminium audit polymère de départ,
- dans une seconde étape, à ajouter au produit de cette réaction au moins un agent électrophile prévu pour réagir avec ledit agent dérivé de l'aluminium,
- dans une troisième étape, à stopper ultérieurement la réaction de fonctionnalisation de la seconde étape et à récupérer le polymère fonctionnalisé le long de sa chaîne.

2. Procédé selon la revendication 1, **caractérisé en ce qu'**il consiste à utiliser pour ledit agent dérivé de l'aluminium un alkyl aluminium ou un aluminate.

3. Procédé selon la revendication 2, **caractérisé en ce qu'**il consiste à utiliser pour ledit agent dérivé de l'aluminium l'hydrure de diisobutyl aluminium.

4. Procédé selon une des revendications précédentes, **caractérisé en ce qu'**il consiste à utiliser entre 0,05 mole et 5 moles dudit agent dérivé de l'aluminium pour 1000 g dudit polymère de départ.

5. Procédé selon la revendication 4, **caractérisé en ce qu'**il consiste à utiliser entre 0,05 mole et 0,5 mole dudit agent dérivé de l'aluminium pour 1000 g dudit polymère de départ.

6. Procédé selon une des revendications précédentes, **caractérisé en ce qu'**il consiste à utiliser, pour ladite seconde étape un agent électrophile ayant un hétéroatome, tel que l'azote et/ou l'oxygène.

7. Procédé selon la revendication 6, **caractérisé en ce qu'**il consiste à utiliser, pour ladite seconde étape et en vue d'obtenir un polymère ayant des fonctions acide carboxylique le long de la chaîne, du dioxyde de carbone à titre d'agent électrophile.

8. Procédé selon une des revendications 1 à 6, **caractérisé en ce qu'**il consiste à utiliser, pour ladite seconde étape et en vue d'obtenir un polymère fonctionnalisé amide, un isocyanate à titre d'agent électrophile.

9. Procédé selon la revendication 8, **caractérisé en ce qu'**il consiste à utiliser du phényl isocyanate pour ledit isocyanate.

10. Procédé selon une des revendications 7 à 9, **caractérisé en ce qu'**il consiste à mettre en oeuvre ladite seconde étape de telle manière que le rapport molaire du nombre de moles dudit agent électrophile sur le nombre de moles dudit agent dérivé de l'aluminium soit égal ou supérieur à 3.

11. Procédé selon la revendication 8 ou 9, **caractérisé en ce qu'**il consiste à mettre en oeuvre ladite seconde étape de telle manière que ledit rapport molaire soit sensiblement égal à 4.

12. Procédé selon une des revendications précédentes, **caractérisé en ce qu'**il consiste, pour le stoppage de la réaction de fonctionnalisation de ladite seconde étape, à ajouter au milieu réactionnel un complexant métallique également prévu pour abaisser la viscosité du milieu réactionnel.

13. Procédé selon la revendication 12, **caractérisé en ce qu'**il consiste à utiliser à titre de complexant un chélate métallique pouvant libérer au moins un proton lors de la réaction de complexation.

14. Procédé selon la revendication 13, **caractérisé en ce qu'**il consiste à utiliser de l'acétylacétone pour ledit chélate.

15. Procédé selon une des revendications 12 à 14, **caractérisé en ce qu'**il consiste à mettre en oeuvre ledit stoppage de telle manière que le rapport molaire du nombre de moles de complexant métallique sur le nombre de moles dudit agent dérivé de l'aluminium soit égal ou supérieur à 3.

16. Procédé selon une des revendications 12 à 15, **caractérisé en ce qu'**il consiste, pour ledit stoppage, à ajouter ensuite au milieu réactionnel un acide fort protonique, tel que l'acide chlorhydrique.

17. Procédé selon la revendication 16, **caractérisé en ce que** le rapport molaire du nombre de moles dudit acide fort protonique sur le nombre de moles dudit agent dérivé de l'aluminium est égal ou supérieur à 3.

## Claims

1. Process for the preparation of polymers comprising at least one double bond and having functional groups containing a carbonyl radical along their chain, **characterized in that** it consists:
- in a first step, in subjecting a starting polymer comprising at least one double bond, in an inert hydrocarbon solvent, to a hydroalumination or carboalumination reaction along its chain by the addition to said starting polymer of an agent derived from aluminium,
- in a second step, in adding to this reaction product at least one electrophilic agent destined to react with said agent derived from aluminium, and
- in a third step, in subsequently stopping the functionalization reaction of the second step and recovering the polymer functionalized along its chain.

2. Process according to claim 1, **characterized in that** it consists in using an alkylaluminium compound or an aluminate as said agent derived from aluminium.

3. Process according to claim 2, **characterized in that** it consists in using diisobutylaluminium hydride as said agent derived from aluminium.

4. Process according to one of the preceding claims, **characterized in that** it consists in using between 0.05 mol and 5 mol of said agent derived from aluminium per 1000 g of said starting polymer.

5. Process according to claim 4, **characterized in that** it consists in using between 0.05 mol and 0.5 mol of said agent derived from aluminium per 1000 g of said starting polymer.

6. Process according to one of the preceding claims, **characterized in that** it consists in using, for said second step, an electrophilic agent containing a heteroatom such as nitrogen and/or oxygen.

7. Process according to claim 6, **characterized in that** it consists in using, for said second step, carbon dioxide as the electrophilic agent to obtain a polymer with carboxylic acid groups along the chain.

8. Process according to one of claims 1 to 6, **characterized in that** it consists in using, for said second step, an isocyanate as the electrophilic agent to obtain a polymer functionalized with amide groups.

9. Process according to claim 8, **characterized in that** it consists in using phenyl isocyanate as said isocyanate.

10. Process according to one of claims 7 to 9, **characterized in that** it consists in carrying out said second step in such a way that the molar ratio of the number of mol of said electrophilic agent to the number of mol of said agent derived from aluminium is equal to or greater than 3.

11. Process according to claim 8 or 9, **characterized in that** it consists in carrying out said second step in such a way that said molar ratio is substantially equal to 4.

12. Process according to one of the preceding claims, **characterized in that**, to stop the functionalization reaction of said second step, it consists in adding to the reaction medium a metal complexing agent, the purpose of which is also to lower the viscosity of the reaction medium.

13. Process according to claim 12, **characterized in that** it consists in using as the complexing agent a metal chelate capable of releasing at least one proton in the complexation reaction.

14. Process according to claim 13, **characterized in that** it consists in using acetylacetone as said chelate.

15. Process according to one of claims 12 to 14, **characterized in that** it consists in stopping said functionalization reaction in such a way that the molar ratio of the number of mol of metal complexing agent to the number of mol of said agent derived from aluminium is equal to or greater than 3.

16. Process according to one of claims 12 to 15, **characterized in that**, to stop said functionalization reaction, it consists in subsequently adding a strong protonic acid, such as hydrochloric acid, to the reaction medium.

17. Process according to claim 16, **characterized in that** the molar ratio of the number of mol of said strong protonic acid to the number of mol of said agent derived from aluminium is equal to or greater than 3.

## Patentansprüche

1. Verfahren zur Herstellung von Polymeren, die mindestens eine Doppelbindung aufweisen und mindestens eine Carbonylfunktion entlang der Kette enthalten, **dadurch gekennzeichnet, dass** es darin besteht:
- in einem ersten Schritt ein anfänglich eingesetztes Polymer, das mindestens eine Doppelbindung aufweist, in einem inerten Lösungsmittel auf Kohlenwasserstoffbasis einer Hydroaluminierung oder Carboaluminierung entlang der Kette zu unterziehen, indem ein Aluminiumderivat zu dem anfänglich eingesetzten Polymer gegeben wird,
- in einem zweiten Schritt zu diesem Reaktionsprodukt mindestens einen elektrophilen Stoff zu geben, der dazu vorgesehen ist, mit dem Aluminiumderivat zu reagieren, und
- in einem dritten Schritt die Funktionalisierungsreaktion des zweiten Schritts zu stoppen und das entlang der Kette funktionalisierte Polymer zu gewinnen.

2. Verfahren nach Anspruch 1, **dadurch gekennzeichnet, dass** als Aluminiumderivat ein Alkylaluminiumderivat oder ein Aluminat verwendet wird.

3. Verfahren nach Anspruch 2, **dadurch gekennzeichnet, dass** als Aluminiumderivat das Diisobutylaluminiumhydrid verwendet wird.

4. Verfahren nach einem der vorhergehenden Ansprüche, **dadurch gekennzeichnet, dass** 0,05 bis 5 mol des Aluminiumderivats auf 1000 g anfänglich eingesetztes Polymer verwendet werden.

5. Verfahren nach Anspruch 4, **dadurch gekennzeichnet, dass** 0,05 bis 0,5 mol des Aluminiumderivats auf 1000 g anfänglich eingesetztes Polymer verwendet werden.

6. Verfahren nach einem der vorhergehenden Ansprüche, **dadurch gekennzeichnet, dass** in dem zweiten Schritt ein elektrophiler Stoff mit Heteroatom, beispielsweise Stickstoff und/oder Sauerstoff, verwendet wird.

7. Verfahren nach Anspruch 6, **dadurch gekennzeichnet, dass** in dem zweiten Schritt zur Herstellung eines Polymers mit Carboxyfunktionen entlang der Kette das Kohlendioxid als elektrophiler Stoff verwendet wird.

8. Verfahren nach einem der Ansprüche 1 bis 6, **dadurch gekennzeichnet, dass** in dem zweiten Schritt zur Herstellung eines Polymers mit Amidfunktionen ein Isocyanat als elektrophiler Stoff verwendet wird.

9. Verfahren nach Anspruch 8, **dadurch gekennzeichnet, dass** als Isocyanat das Phenylisocyanat verwendet wird.

10. Verfahren nach einem der Ansprüche 7 bis 9, **dadurch gekennzeichnet, dass** der zweite Schritt so durchgeführt wird, dass das Molverhältnis der Molzahl des elektrophilen Stoffes und der Molzahl des Aluminiumderivats 3 beträgt oder darüber liegt.

11. Verfahren nach Anspruch 8 oder 9, **dadurch gekennzeichnet, dass** der zweite Schritt so durchgeführt wird, dass das Molverhältnis etwa 4 beträgt.

12. Verfahren nach einem der vorhergehenden Ansprüche, **dadurch gekennzeichnet, dass** zum Stoppen der Funktionalisierung des zweiten Schrittes zu dem Reaktionsmedium ein Metallkomplexbildner gegeben wird, der auch dazu dient, die Viskosität des Reaktionsmediums zu senken.

13. Verfahren nach Anspruch 12, **dadurch gekennzeichnet, dass** als Komplexbildner ein Metallchelat verwendet wird, das bei der Komplexierung mindestens ein Proton freisetzen kann.

14. Verfahren nach Anspruch 13, **dadurch gekennzeichnet, dass** als Chelat das Acetylaceton verwendet wird.

15. Verfahren nach einem der Ansprüche 12 bis 14, **dadurch gekennzeichnet, dass** das Stoppen so durchgeführt wird, dass das Molverhältnis der Molzahl des Metallkomplexbildners und der Molzahl des Aluminiumderivats 3 beträgt oder darüber liegt.

16. Verfahren nach einem der Ansprüche 12 bis 15, **dadurch gekennzeichnet, dass** zum Stoppen eine starke Protonensäure zu dem Reaktionsmedium gegeben wird, beispielsweise Salzsäure.

17. Verfahren nach Anspruch 16, **dadurch gekennzeichnet, dass** das Molverhältnis der Molzahl der starken Protonensäure und der Molzahl des Aluminiumderivats 3 beträgt oder darüber liegt.
